# EUROPEAN PATENT SPECIFICATION

(11) **EP 2 590 360 B1**
(45) Date of publication and mention of the grant of the patent: **17.04.2019**
(21) Application number: 10854000.6
(22) Date of filing: 27.12.2010
(51) Int. Cl.: H04L 29/06, H04M 3/56, H04L 12/18

(54) **MULTI-POINT SOUND MIXING METHOD, APPARATUS AND SYSTEM**
MEHRPUNKT-TONMISCHUNGSVERFAHREN, VORRICHTUNG UND SYSTEM
PROCÉDÉ, DISPOSITIF ET SYSTÈME DE MIXAGE SONORE MULTIPOINT

(30) Priority: 29.06.2010 CN 201010218209
(43) Date of publication of application: 08.05.2013
(73) Proprietor: ZTE Corporation, Shenzhen, Guangdong 518057 (CN)
(72) Inventor: WU, Mingliang, Shenzhen Guangdong 518057 (CN); SUN, Bo, Shenzhen Guangdong 518057 (CN)
(74) Representative: Mozzi, Matteo
(86) International application number: PCT/CN2010/080331
(87) International publication number: WO 2012/000297

(56) References cited:
- WO-A2-2008/035275
- CN-A- 1 917 622
- CN-A- 101 179 693
- CN-A- 101 877 643
- US-A- 5 889 843
- US-A1- 2006 013 416
- US-A1- 2009 080 632
- US-A1- 2009 088 880

## Description

### Technical Field

The present invention relates to the field of communications, and in particular to a multi-point sound mixing and distant view presentation method, apparatus and system.

### Background

Distant view presentation is welcomed by high-end users because of its real presence. Position distinguishing via listening to the sound, real size and eye contact are key technical indexes in the distant view presentation.

In a traditional conference system, each meeting place only has one path of audio or two paths of audios. The sound which is able to be listened in each meeting place is the sound after mixing and superposing three meeting places with a loudest sound in the whole meeting. There is only one input source and one output of the sound in each meeting place, therefore people cannot distinguish which position of the meeting place the sound is given from.

In a distant view presentation conference system, each meeting place has a single screen or a plurality of screens, wherein each screen displays an image of one participant, and each participant corresponds to one audio input correspondingly. In order to achieve the position distinguishing via listening to the sound, under the condition of a plurality of screens, for example, in a three-screen meeting place, if a participant in a left seat is speaking, participants in other meeting places should be able to distinguish that the sound is let out from the left side; if a participant in a middle seat is speaking, the participants of other meeting places should be able to distinguish that the sound is from the middle place; and if a participant in a right seat is speaking, the participants in other meeting places should be able to distinguish that the sound is from the right side. The position from which the sound is given should be the same as the position on which the screen, which shows the image of the speaker, is located, namely, the sound follows the image.

In this case, the input and output of the audios with different positions need to be mixed distinguishingly. A traditional single-audio sound mixing method obviously cannot satisfy such a situation. In addition, in a multi-point conference in which a single-screen meeting place and a multi-screen meeting place intercommunicate with each other, the problem that how to mix and output the sound of the single-screen meeting place and the multi-screen meeting place without influencing the effect of distinguishing positions via listening to the sounds of the two meeting places also needs to be solved.

The inventor finds that the distant view presenting conference system is hard to distinguish sounds in different sections in above related techniques.

The U.S. Patent Application US2006/013416A1 relates to methods and devices for improving the intelligibility of audio in a teleconferencing unit.

The U.S. Patent US 5889843 A relates to methods and systems for creating a spatial auditory environment in an audio conference system.

The U.S. Patent Application US 2009/080632 A1 describes a spatial audio conferencing system and method.

### Summary

The present invention provides a multi-point sound mixing method, apparatus and system according to claims 1, 7 and 8, respectively, which at least solves the problem that the above distant view presentation conference system is hard to distinguish the sounds in different sections.

According to one aspect of the present invention, a multi-point sound mixing method is provided, comprising: receiving audio code streams from a plurality of meeting places, wherein each meeting place comprises one or more meeting sections, at least one of the meeting places comprising a plurality of meeting sections, wherein each of the meeting sections respectively corresponds to a respective different position in the meeting place, associated with a respective position information; associating each of the received audio code streams with the respective position information corresponding to the one or more meeting sections of the meeting place to which each of the received audio streams corresponds; mixing the audio code streams being associated with the same position information into respectively corresponding mixed audio code streams; and outputting each of the mixed audio code streams to one of the meeting sections in each meeting place, in correspondence with the position information to which each of said mixed audio code streams and each of said meeting sections correspond.

According to an embodiment of the invention, in a case that a first meeting place which comprises one meeting section and a second meeting place which comprises a plurality of meeting sections exist in the plurality of meeting places, the step of mixing the audio code streams being associated with the same position information into respectively corresponding mixed audio code streams comprises: mixing an audio code stream of the meeting section of the first meeting place and an audio code stream of one of the meeting sections of the second meeting place.

According to an embodiment of the invention, the step of outputting each of the mixed audio code streams to one of the meeting sections in each meeting place comprises: outputting the mixed audio code streams to the meeting section of the first meeting place and the meeting section, of which the audio code stream is mixed with the audio code stream of the meeting section of the first meeting place, in the second meeting place.

According to an embodiment of the invention, the method further comprises mixing the audio code streams of all meeting sections in the plurality of meeting places, and outputting the mixed audio code streams to the first meeting place.

According to an embodiment of the invention, said positions comprises a left position, a middle position and a right position.

According to an embodiment of the invention, at least one of the plurality of meeting places comprises three meeting sections, wherein the three meeting sections comprise a left meeting section, a middle meeting section and a right meeting section.

According to another aspect of the present invention, a multi-point sound mixing apparatus is provided, comprising: a receiving module, configured to receive audio code streams from a plurality of meeting places, wherein each meeting place comprises one or more meeting sections, at least one of the meeting places comprising a plurality of meeting sections, wherein each of the meeting sections respectively corresponds to a respective different position in the meeting place, associated with a respective position information, the receiving module being also configured to associate each of the received audio code streams with the respective position information corresponding to the one or more meeting sections of the meeting place to which each of the received audio streams corresponds; a sound mixing module, configured to mix the audio code streams being associated with the same position information into respectively corresponding mixed audio code streams; and an outputting module, configured to output each of said mixed audio code streams to one of the meeting sections in each meeting place, in correspondence with the position information to which each of said mixed audio code streams and each of said meeting sections correspond..

According to still another aspect of the present invention, a multi-point sound mixing system, comprising: a plurality of meeting places, wherein each meeting place comprises one or more meeting sections, at least one of the meeting places comprising a plurality of meeting sections, wherein each of the meeting sections respectively corresponds to a respective different position in the meeting place, associated with a respective position information; and a multi-point sound mixing apparatus, configured to receive audio code streams from the plurality of meeting places, wherein each of the received audio code streams is associated with the respective position information corresponding to the one or more meeting sections of the meeting place to which each of the received audio streams corresponds, and configured to mix the audio code streams being associated with the same position information into respectively corresponding mixed audio code streams, and configured to output each of said mixed audio code streams to one of the meeting sections in each meeting place, in correspondence with the position information to which each of said mixed audio code streams and each of said meeting sections correspond..

In accordance with the present invention, audio code streams are received from a plurality of meeting places, wherein each meeting place includes one or more meeting sections, and each meeting section corresponds to one audio code stream; the audio code streams of the meeting sections which have a corresponding relationship among the plurality of meeting places are mixed; and the mixed audio code streams are output to the meeting sections which have the corresponding relationship among the plurality of meeting places. In this way, the problem that the distant view presentation conference system is hard to distinguish the sounds in different sections is solved; and the effect of distinguishing the sounds in different sections in the distant view presentation conference system can be achieved.

### Brief Description of the Drawings

Drawings, provided for further understanding of the present invention and forming a part of the specification, are used to explain the present invention together with embodiments of the present invention rather than to limit the present invention, wherein:
Fig. 1 shows a schematic diagram of a multi-point sound mixing and distant view presentation apparatus according to a first embodiment of the present invention;
Fig. 2 shows a flowchart of a multi-point sound mixing and distant view presentation method according to the first embodiment of the present invention;
Fig. 3 shows a flowchart of a multi-point sound mixing and distant view presentation method according to a second embodiment of the present invention;
Fig. 4 shows a schematic diagram of a multi-point sound mixing and distant view presentation apparatus according to the second embodiment of the present invention;
Fig. 5 shows a schematic diagram of a multi-point sound mixing conference system according to an embodiment of the present invention.

### Detailed Description of the Embodiments

The present invention is described below in details with reference to the drawings and embodiments. It should be noted that, the embodiments of the application and the characteristics of the embodiments can be mutually combined under the condition of no conflict.

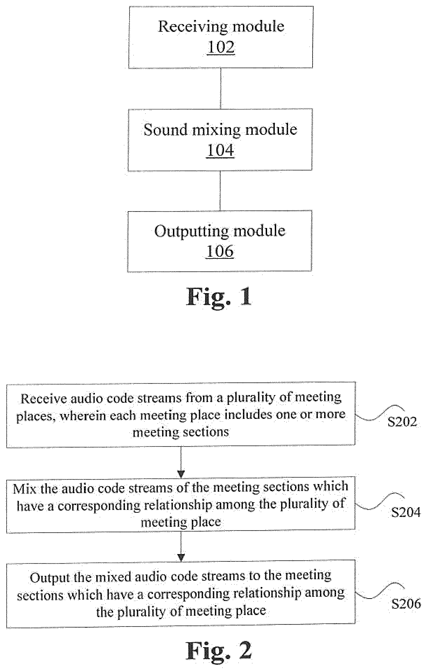

Fig. 1 shows a schematic diagram of a multi-point sound mixing and distant view presentation apparatus according to a first embodiment of the present invention.

As shown in Fig. 1, the multi-point sound mixing and distant view presentation apparatus includes a receiving module 102, a sound mixing module 104 and an outputting module 106.

In the above, the receiving module 102 is configured to receive audio code streams from a plurality of meeting places, wherein each meeting place includes one or more meeting sections, and each meeting section corresponds to one of the audio code streams. The sound mixing module 104 is configured to mix the audio code streams of the meeting sections which have a corresponding relationship among the plurality of meeting places. The outputting module 106 is configured to output mixed audio code streams to the meeting sections which have the corresponding relationship among the plurality of meeting places.

Fig. 2 shows a flowchart of a multi-point sound mixing and distant view presentation method according to the first embodiment of the present invention. The method can be implemented by using the above multi-point sound mixing and distant view presentation apparatus. As shown in Fig. 2, the method includes steps as follows.

Step S202, audio code streams are received from a plurality of meeting places, wherein each meeting place includes one or more meeting sections, and each meeting section corresponds to one of the audio code streams.

For example, in the plurality of meeting places, all the meeting places can be the meeting places including a plurality of meeting sections, and also, one or more meeting places can only include one meeting section.

The meeting place can include one or more screens, and each screen corresponds to one meeting section. A camera apparatus and an audio apparatus can be arranged in each screen or each meeting section.

Step S204, the audio code streams of the meeting sections which have a corresponding relationship among the plurality of meeting places are mixed. For example, the meeting sections which have the corresponding relationship among the plurality of meeting places can be the meeting sections with the same position (direction), and also can be any meeting sections which are set to have corresponding relationship between each other. For example, the sections can be divided into left sections and right sections, and the audio code streams of the left sections in each meeting place are mixed, and the audio code streams in the right sections in each meeting place are mixed.

Step S206, mixed audio code streams are output to the meeting sections which have the corresponding relationship among the plurality of meeting places. For example, after the audio code streams in the left sections in each meeting place are mixed, the mixed audio code stream is output to the left sections in each meeting place; and after the audio code streams in the right sections in each meeting place are mixed, the mixed audio code stream is output to the right sections in each meeting place.

In the above embodiment, the audio code streams of the meeting sections, which have the corresponding relationship among the plurality of meeting places, are mixed and output to the corresponding meeting sections, therefore, the sounds in different sections in the distant view presentation conference system can be distinguished, thus improving the user experience.

Preferably, each meeting section respectively corresponds to different positions. The step of mixing the audio code streams of the meeting sections which have the corresponding relationship among the plurality of meeting places includes: the audio code streams of the meeting sections with the same position in each meeting place are mixed. The step of outputting the mixed audio code streams to the meeting sections which have the corresponding relationship among the plurality of meeting places includes: outputting the mixed audio code steams to the meeting sections with the same position. The effect of distinguishing positions via listening to the sound can be achieved via the embodiment.

Preferably, each of the audio code streams includes position information of the meeting section. The step of mixing the audio code streams of the meeting sections with the same position in each meeting place includes: the audio code streams of the meeting sections with the same position in each meeting place are mixed according to the position information. The effect of distinguishing position via listening to the sound can be achieved simply via the embodiment.

Preferably, in a case that a first meeting place which includes one meeting section and a second meeting place which includes a plurality of meeting places exist in the plurality of meeting places, the step of mixing the audio code streams of the meeting sections which have the corresponding relationship among the plurality of meeting places includes: an audio code stream of the meeting section in the first meeting place is mixed with an audio code stream of one of the meeting sections in the second meeting place.

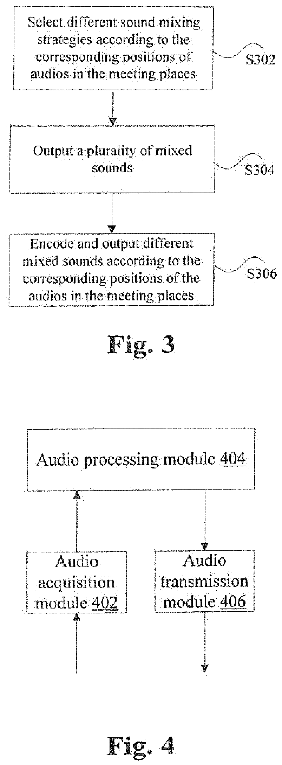

Fig. 3 shows a flowchart for processing an audio data stream in a multi-point sound mixing method according to an embodiment of the present invention. By taking a multi-point conference in which a three-screen meeting place and a single-screen meeting place exist as an example, as shown in Fig. 3, the method includes steps as follows.

Step S302, during a meeting process, each meeting place includes a plurality of screens, and each screen corresponds to one audio input (one path of audio input), the sounds are mixed distinguishingly according to the positions of the left seat, the middle seat and the right seat that each audio code stream locates in the meeting place.

For example, the sounds are mixed distinguishingly according to the positions of the left seat, the middle seat and the right seat that each audio code stream locates in the meeting place. Namely, the sounds input by the left seats of all the meeting places are mixed and superposed; the sounds input by the middle seats of all the meeting places are mixed and superposed, and the sounds input by the right seats of all the meeting places are mixed and superposed, the single-screen meeting place is taken as a special middle seat to participate in sound mixing of all the middle seats; meanwhile, all the input sounds of the meeting place are additionally mixed and superposed, thus four groups of mixed sounds are obtained. For example, a multi-point conference is held in 3 three-screen meeting places A, B and C and one single-screen meeting place D, the three paths of sounds input by the left seats of the three-screen meeting places A, B and C can be mixed and superposed, the total four paths of sounds, namely, the sounds of three middle seats of the three-screen meeting places A, B and C and the sound of the single-screen meeting place D can be mixed and superposed; the three paths of sounds input by the right seats of the three-screen meeting places A, B and C can be mixed and superposed; and the total 1 0 paths of sounds input by A, B, C and D can be mixed and superposed.

Step S304, after implementing sound mixing for all the input code streams, a conference audio processing module outputs a plurality of mixed audio code streams, including the mixed audio code stream of the left seat, the mixed audio code stream of the middle seat, the mixed audio code stream of the right seat and the mixed audio code stream of all seats.

The conference audio processing module outputs four groups of mixed audio code streams after implementing sound mixing for all the input code streams, wherein the four groups of mixed audio code streams include the mixed audio code stream of all the left seats, the mixed audio code stream of all the middle seats, the mixed audio code stream of all the right seats and the mixed audio code streams of all the seats.

Step S306, different mixed audio code streams are encoded and output to different positions of the meeting places according to the situations of each meeting place. For example, the input audio code streams of the left seats are mixed and output to the left seats, the input audio code streams of the middle seats are mixed and output to the middle seats, and the input audio code streams of the right seats are mixed and output to the right seats, thus achieving the effect of distinguishing position via listening to the sound. When the single-screen meeting place and the multi-screen meeting place communicate mutually, the input audio code streams of all the seats are mixed and then output to the single-screen meeting place; the audio code stream input by the single-screen meeting place is mixed with the audio code streams of all the middle seats, and the obtained audio code stream is output to the middle seats of the multi-screen meeting place.

According to the situations of each meeting place, different mixed audio code streams can be encoded and output to different positions of the meeting places. For example, the mixed audio code stream of all the left seats are encoded and output to the left seats, the mixed audio code stream of all the middle seats are encoded and output to the middle seats, and the mixed audio code stream of all the right seats are encoded and output to the right seats, so as to achieve the effect of distinguishing positions by listening to the sounds. When the single-screen meeting place and the multi-screen meeting place communicate mutually, the mixed audio code stream of all the seats is encoded and output to the single-screen meeting place; the audio code stream input by the single-screen meeting place is mixed with the audio code streams of all the middle seats, and the obtained audio code stream is encoded and output to the middle seats of the multi-screen meeting place.

For example, the mixed audio code stream of all the left seats can be encoded and output to the left seats of A, B and C; the mixed audio code stream of all the middle seats can be encoded and output to the middle seats of A, B and C; the mixed audio code stream of all the right seats can be encoded and output to the right seats of A, B and C; and the mixed audio code stream of all the seats are encoded and output to the single-screen meeting place D.

The sound mixing method in above embodiments can support the sound-follow-image in the conference system. According to the situations of each meeting place in the conference, the single-seat meeting place and the multi-seat meeting place can both implement effective sound mixing, without influencing the effect of distinguishing positions by listening to the sounds.

Fig. 4 shows a schematic diagram of a multi-point sound mixing and distant view presentation apparatus according to a second embodiment of the present invention.

An audio processing apparatus can include: an audio acquisition module 402, configured to acquire each audio code stream in meeting places; an audio processing module 404, configured to process the audio code streams, mix the audio code streams in the meetings, mix, encode and output the sound according to the input positions of audios in the meeting place; an audio transmission module 406, configured to output the mixed and encoded audios to the meeting places.

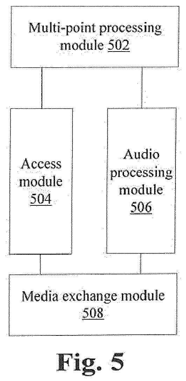

Fig. 5 shows a schematic diagram of a multi-point sound mixing conference system according to an embodiment of the present invention.

As shown in Fig. 5, the multi-point sound mixing conference system can include a multi-point processing module 502, an access module 504, an audio processing module 506 and a media exchange module 508.

In the above, the multi-point processing module 502 is configured to control multi-point access, audio processing and media exchange. The access module 504 is configured to access a plurality of audio code streams of all the meeting places in the conference. The audio processing module 506 is configured to switch between encoding and decoding of all the audio code streams in the meeting places, and encode and output after mixing the sounds; the media exchange module 508 is configured to exchange and output the code streams output by the audio processing module to each meeting place.

A multi-point sound mixing and distant view presentation system is also provided according to an embodiment of the present invention. The system includes: a plurality of meeting places, wherein each meeting place includes one or more meeting sections, and each meeting section corresponds to one audio code stream; a multi-point sound mixing and distant view presentation apparatus, configured to mix the audio code streams of the meeting sections which have a corresponding relationship among the plurality of meeting places, and output mixed audio code streams to the meeting sections which have the corresponding relationship among the plurality of meeting places.

In the above, the multi-point sound mixing and distant view presentation apparatus in the system embodiment can be any one of the multi-point sound mixing and distant view presentation apparatus in the above embodiments.

Preferably, the meeting sections which have the corresponding relationship among the plurality of meeting places can be the meeting sections with same position information in each meeting place.

It can be concluded from the above descriptions that the embodiments of the present invention can solve one or more problems existing in multi-point sound mixing in the distant view presentation conference system, thus achieving the effect of distinguishing the sounds from different sections, and achieving the high-presence effect of distinguishing position by listening to the sound.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. The scope of the invention is defined by the appended claims.

## Claims

1. A multi-point sound mixing method, comprising:
receiving audio code streams from a plurality of meeting places (S202), wherein each meeting place comprises one or more meeting sections, at least one of the meeting places comprising a plurality of meeting sections, wherein each of the meeting sections respectively corresponds to a respective different position in the meeting place, associated with a respective position information;
associating each of the received audio code streams with the respective position information corresponding to the one or more meeting sections of the meeting place to which each of the received audio streams corresponds;
mixing the audio code streams being associated with the same position information into respectively corresponding mixed audio code streams (S204); and
outputting each of the mixed audio code streams to one of the meeting sections in each meeting place (S206), in correspondence with the position information to which each of said mixed audio code streams and each of said meeting sections correspond.

2. The method according to claim 1, **characterized in that** in a case that a first meeting place which comprises one meeting section and a second meeting place which comprises a plurality of meeting sections exist in the plurality of meeting places, the step of mixing the audio code streams being associated with the same position information into respectively corresponding mixed audio code streams (S204) comprises:
mixing an audio code stream of the meeting section of the first meeting place and an audio code stream of one of the meeting sections of the second meeting place.

3. The method according to claim 2, wherein the step of outputting each of the mixed audio code streams to one of the meeting sections in each meeting place (S206) comprises:
outputting the mixed audio code streams to the meeting section of the first meeting place and the meeting section, of which the audio code stream is mixed with the audio code stream of the meeting section of the first meeting place, in the second meeting place.

4. The method according to claim 2, wherein the method further comprises:
mixing the audio code streams of all meeting sections in the plurality of meeting places, and outputting the mixed audio code streams to the first meeting place.

5. The method according to claim 1, wherein said positions comprise a left position, a middle position and a right position.

6. The method according to any one of claims 1 to 5, wherein at least one of the plurality of meeting places comprises three meeting sections, wherein the three meeting sections comprise a left meeting section, a middle meeting section and a right meeting section.

7. A multi-point sound mixing apparatus, comprising:
a receiving module (102), configured to receive audio code streams from a plurality of meeting places, wherein each meeting place comprises one or more meeting sections, at least one of the meeting places comprising a plurality of meeting sections, wherein each of the meeting sections respectively corresponds to a respective different position in the meeting place, associated with a respective position information, the receiving module (102) being also configured to associate each of the received audio code streams with the respective position information corresponding to the one or more meeting sections of the meeting place to which each of the received audio streams corresponds;
a sound mixing module (104), configured to mix the audio code streams being associated with the same position information into respectively corresponding mixed audio code streams; and
an outputting module (106), configured to output each of said mixed audio code streams to one of the meeting sections in each meeting place, in correspondence with the position information to which each of said mixed audio code streams and each of said meeting sections correspond.

8. A multi-point sound mixing system, comprising:
a plurality of meeting places, wherein each meeting place comprises one or more meeting sections, at least one of the meeting places comprising a plurality of meeting sections, wherein each of the meeting sections respectively corresponds to a respective different position in the meeting place, associated with a respective position information; and
a multi-point sound mixing apparatus according to claim 7, configured to receive audio code streams from the plurality of meeting places, wherein each of the received audio code streams is associated with the respective position information corresponding to the one or more meeting sections of the meeting place to which each of the received audio streams corresponds, and configured to mix the audio code streams being associated with the same position information into respectively corresponding mixed audio code streams, and configured to output each of said mixed audio code streams to one of the meeting sections in each meeting place, in correspondence with the position information to which each of said mixed audio code streams and each of said meeting sections correspond.

## Patentansprüche

1. Mehrpunkt-Tonmischungsverfahren, umfassend:
Empfangen von Audiocode-Streams von einer Vielzahl von Besprechungsorten (S202), wobei jeder Besprechungsort einen oder mehrere Besprechungsabschnitte umfasst, wobei mindestens einer der Besprechungsorte eine Vielzahl von Besprechungsabschnitten umfasst, wobei jeder der Besprechungsabschnitte einer jeweiligen unterschiedlichen Position am Besprechungsort entspricht, der mit einer jeweilige Positionsinformation verknüpft ist;
Verknüpfen eines jeden der empfangenen Audiocode-Streams mit der jeweiligen Positionsinformation, die dem einen oder den mehreren Besprechungsabschnitten des Besprechungsortes entspricht, dem jeder der empfangenen Audiostreams entspricht;
Mischen der Audiocode-Streams, die mit der gleichen Positionsinformation verknüpft sind, zu jeweils entsprechenden gemischten Audiocode-Streams (S204); und
Ausgeben eines jeden der gemischten Audiocode-Streams an einen der Besprechungsabschnitte an jedem Besprechungsort (S206) entsprechend der Positionsinformation, der jeder der gemischten Audiocode-Streams und jeder der Besprechungsabschnitte entspricht.

2. Verfahren nach Anspruch 1, **dadurch gekennzeichnet, dass** in einem Fall, dass ein erster Besprechungsort, der einen Besprechungsabschnitt umfasst, und ein zweiter Besprechungsort, der eine Vielzahl von Besprechungsabschnitten umfasst, in der Vielzahl von Besprechungsorten vorhanden sind, der Schritt des Mischens der Audiocode-Streams, die mit der gleichen Positionsinformation verknüpft sind, zu jeweils entsprechenden gemischten Audiocode-Streams (S204) Folgendes umfasst:
Mischen eines Audiocode-Streams des Besprechungsabschnitts des ersten Besprechungsortes und eines Audiocode-Streams eines der Besprechungsabschnitte des zweiten Besprechungsortes.

3. Verfahren nach Anspruch 2, wobei der Schritt des Ausgebens eines jeden der gemischten Audiocode-Streams an einen der Besprechungsabschnitte an jedem Besprechungsort (S206) Folgendes umfasst:
Ausgeben der gemischten Audiocode-Streams an den Besprechungsabschnitt des ersten Besprechungsortes und den Besprechungsabschnitt, von dem der Audiocode-Stream mit dem Audiocode-Stream des Besprechungsabschnitts des ersten Besprechungsortes gemischt wird, an dem zweiten Besprechungsort.

4. Verfahren nach Anspruch 2, wobei das Verfahren ferner Folgendes umfasst:
Mischen der Audiocode-Streams aller Besprechungsabschnitte an der Vielzahl von Besprechungsorten und Ausgeben der gemischten Audiocode-Streams an den ersten Besprechungsort.

5. Verfahren nach Anspruch 1, wobei die Positionen eine linke Position, eine mittlere Position und eine rechte Position umfassen.

6. Verfahren nach einem beliebigen der Ansprüche 1 bis 5, wobei mindestens einer der Vielzahl von Besprechungsorten drei Besprechungsabschnitte umfasst, wobei die drei Besprechungsabschnitte einen linken Besprechungsabschnitt, einen mittleren Besprechungsabschnitt und einen rechten Besprechungsabschnitt umfassen.

7. Mehrpunkt-Tonmischvorrichtung, umfassend:
ein Empfangsmodul (102), das konfiguriert ist, um Audiocode-Streams von einer Vielzahl von Besprechungsorten zu empfangen, wobei jeder Besprechungsort einen oder mehrere Besprechungsabschnitte umfasst, wobei mindestens einer der Besprechungsorte eine Vielzahl von Besprechungsabschnitten umfasst, wobei jeder der Besprechungsabschnitte jeweils einer jeweiligen unterschiedlichen Position an dem Besprechungsort entspricht, der mit einer jeweiligen Positionsinformation verknüpft ist, wobei das Empfangsmodul (102) ferner konfiguriert ist, um jeden der empfangenen Audiocode-Streams mit der jeweiligen Positionsinformation zu verknüpfen, die dem einen oder den mehreren Besprechungsabschnitten des Besprechungsortes entspricht, dem jeder der empfangenen Audiostreams entspricht;
ein Tonmischmodul (104), das konfiguriert ist, um die mit der gleichen Positionsinformation verknüpften Audiocode-Streams zu jeweils entsprechenden gemischten Audiocode-Streams zu mischen; und
ein Ausgabemodul (106), das konfiguriert ist, um jeden der gemischten Audiocode-Streams an einen der Besprechungsabschnitte an jedem Besprechungsort entsprechend der Positionsinformation auszugeben, der jeder der gemischten Audiocode-Streams und jeder der Besprechungsabschnitte entspricht.

8. Mehrpunkt-Tonmischsystem, umfassend:
eine Vielzahl von Besprechungsorten, wobei jeder Besprechungsort einen oder mehrere Besprechungsabschnitte umfasst, wobei mindestens einer der Besprechungsorte eine Vielzahl von Besprechungsabschnitten umfasst, wobei jeder der Besprechungsabschnitte jeweils einer jeweiligen unterschiedlichen Position an dem Besprechungsort entspricht, der mit einer jeweilige Positionsinformation verknüpft ist; und
Mehrpunkt-Tonmischvorrichtung nach Anspruch 7, die konfiguriert ist, um Audiocode-Streams von der Vielzahl von Besprechungsorten zu empfangen, wobei jeder der empfangenen Audiocode-Streams mit der jeweiligen Positionsinformation verknüpft ist, die dem einen oder den mehreren Besprechungsabschnitten des Besprechungsortes entspricht, dem jeder der empfangenen Audiostreams entspricht, und die konfiguriert ist, um die Audiocode-Streams, mit denen die gleiche Positionsinformation verknüpft ist, zu jeweils entsprechenden gemischten Audiocode-Streams zu mischen, und die konfiguriert ist, um jeden der gemischten Audiocode-Streams an einen der Besprechungsabschnitte an jedem Besprechungsort entsprechend der Positionsinformation auszugeben, der jeder der gemischten Audiocode-Streams und jeder der Besprechungsabschnitte entspricht.

## Revendications

1. Procédé de mixage sonore multipoint, comprenant:
la réception de flux de code audio provenant d'une pluralité de lieux de réunion (S202), dans lequel chaque lieu de réunion comprend une ou plusieurs sections de réunion, au moins un des lieux de réunion comprenant une pluralité de sections de réunion, dans lequel chacune des sections de réunion correspond respectivement à une position différente respective dans le lieu de réunion, associée à une information de position respective ;
l'association de chacun des flux de code audio reçus à l'information de position respective correspondant à la ou aux sections de réunion du lieu de réunion auquel correspond chacun des flux audio reçus;
le mixage des flux de code audio associés à la même information de position respectivement en flux de code audio mixés correspondants (S204); et
la délivrance en sortie de chacun des flux de code audio mixés vers l'une des sections de réunion dans chaque lieu de réunion (S206), en correspondance avec l'information de position à laquelle correspondent chacun desdits flux de code audio mixés et chacune desdites sections de réunion.

2. Procédé selon la revendication 1, **caractérisé en ce que**, dans le cas où un premier lieu de réunion qui comprend une section de réunion et un second lieu de réunion qui comprend une pluralité de sections de réunion existent parmi la pluralité de lieux de réunion, l'étape consistant à mixer les flux de code audio associés à la même information de position respectivement en flux de code audio mixés correspondants (S204) comprend :
le mixage d'un flux de code audio de la section de réunion du premier lieu de réunion et d'un flux de code audio d'une des sections de réunion du second lieu de réunion.

3. Procédé selon la revendication 2, dans lequel l'étape de délivrance en sortie de chacun des flux de code audio mixés vers l'une des sections de réunion dans chaque lieu de réunion (S206) comprend :
la délivrance en sortie des flux de code audio mixés vers la section de réunion du premier lieu de réunion et la section de réunion, dont le flux de code audio est mixé avec le flux de code audio de la section de réunion du premier lieu de réunion, dans le second lieu de réunion.

4. Procédé selon la revendication 2, dans lequel le procédé comprend en outre :
le mixage des flux de code audio de toutes les sections de réunion dans la pluralité de lieux de réunion et la délivrance en sortie des flux de code audio mixés vers le premier lieu de réunion.

5. Procédé selon la revendication 1, dans lequel lesdites positions comprennent une position de gauche, une position médiane et une position de droite.

6. Procédé selon l'une quelconque des revendications 1 à 5, dans lequel au moins un lieu de réunion parmi la pluralité de lieux de réunion comprend trois sections de réunion, dans lequel les trois sections de réunion comprennent une section de réunion de gauche, une section de réunion médiane et une section de réunion de droite.

7. Appareil de mixage sonore multipoint, comprenant :
un module de réception (102) configuré pour recevoir des flux de code audio provenant d'une pluralité de lieux de réunion, dans lequel chaque lieu de réunion comprend une ou plusieurs sections de réunion, au moins un des lieux de réunion comprenant une pluralité de sections de réunion, dans lequel chacune des sections de réunion correspond respectivement à une position différente respective dans le lieu de réunion, associée à une information de position respective, le module de réception (102) étant également configuré pour associer chacun des flux de code audio reçus à l'information de position respective correspondant à la ou aux sections de réunion du lieu de réunion auxquelles correspond chacun des flux audio reçus ;
un module de mixage sonore (104), configuré pour mixer les flux de code audio associés à la même information de position respectivement en flux de code audio mixés correspondants ; et
un module de sortie (106), configuré pour délivrer en sortie chacun desdits flux de code audio mixés vers l'une des sections de réunion de chaque lieu de réunion, en correspondance avec l'information de position à laquelle correspondent chacun desdits flux de codes audio mixés et chacune desdites sections de réunion.

8. Système de mixage sonore multipoint, comprenant :
une pluralité de lieux de réunion, dans lequel chaque lieu de réunion comprend une ou plusieurs sections de réunion, au moins un des lieux de réunion comprenant une pluralité de sections de réunion, dans lequel chacune des sections de réunion correspond respectivement à une position différente respective dans le lieu de réunion, associée à une information de position respective ; et
un appareil de mixage sonore multipoint selon la revendication 7, configuré pour recevoir des flux de code audio provenant de la pluralité de lieux de réunion, dans lequel chacun des flux de code audio reçus est associé à l'information de position respective correspondant à la ou aux sections de réunion du lieu de réunion auxquelles correspondent chacun des flux audio reçus et configuré pour mixer les flux de code audio associés à la même information de position respectivement en flux de code audio mixés correspondants et configuré pour délivrer en sortie chacun desdits flux de code audio mixés à une des sections de réunion dans chaque lieu de réunion, en correspondance avec les informations de position auxquelles correspondent chacun desdits flux de code audio mixés et chacune desdites sections de réunion.
